# EUROPÄISCHE PATENTSCHRIFT

(11) **EP 2 896 850 B1**
(45) Veröffentlichungstag und Bekanntmachung des Hinweises auf die Patenterteilung: **15.03.2017**
(21) Anmeldenummer: 14151957.9
(22) Anmeldetag: 21.01.2014
(51) Int. Cl.: F16D 65/18, F16D 25/0635

(54) **SICHERHEITSSYSTEM FÜR ANTRIEBSTECHNISCHE KONSTRUKTIONSELEMENTE**
SECURITY SYSTEM FOR DRIVE TECHNOLOGY CONSTRUCTION ELEMENTS
SYSTÈME DE SÉCURITÉ POUR ÉLÉMENTS DE CONSTRUCTION À ENTRAÎNEMENT

(43) Veröffentlichungstag der Anmeldung: 22.07.2015
(73) Patentinhaber: Ortlinghaus-Werke GmbH, 42929 Wermelskirchen (DE)
(72) Erfinder: Boccarius, Steve, 51375 Leverkusen (DE); Rutkowski, Rafael Stefan, 50670 Köln (DE)
(74) Vertreter: Stenger Watzke Ring

(56) Entgegenhaltungen:
- DE-A1-102004 025 296
- US-A- 3 520 385
- US-A- 3 704 652
- US-A- 3 731 772
- US-A1- 2010 096 222

## Beschreibung

Die Erfindung betrifft ein Sicherheitssystem für antriebstechnische Konstruktionselemente, insbesondere Bremsen und lösbare Kupplungen, mit einem hydraulisch angetriebenen Kolben, der in einem Zylinder gleitend gelagert ist, wobei der Kolben und der Zylinder jeweils eine erste Gleitfläche und eine zweite, durch einen Wellenabsatz insbesondere radial von der ersten Gleitfläche beabstandete Gleitfläche aufweisen, wobei sich ein Arbeitsraum axial zwischen dem Wellenabsatz des Kolbens und dem Wellenabsatz des Zylinders erstreckt, wobei der Arbeitsraum zur einen Seite im Bereich der ersten Gleitflächen mit einem ersten Dichtsystem und zur anderen Seite im Bereich der zweiten Gleitflächen mit einem zweiten Dichtsystem abgedichtet ist.

Beispiele für antriebstechnische Konstruktionselemente, bei denen derartige Sicherheitssysteme eingesetzt werden, sind Bremsen und Kupplungen. Eine Bremse mit einer zuvor beschriebenen Kolbenzylindereinheit ist beispielsweise aus der DE 10 2004 025 296 A1 bekannt. Es handelt sich hierbei um eine Vorrichtung, die zum Abbremsen von Lasten bis zum Stillstand verwendet wird. Derartige Bremsen werden beispielsweise im Maschinenbau vielfältig eingesetzt bei Pressen und dergleichen. Lösbare Kupplungen werden eingesetzt zur lösbaren Verbindung zwischen zwei Wellen. Entscheidend ist bei beiden Konstruktionselementen, dass diese zwischen einer ein Drehmoment zwischen An- und Abtrieb übertragenden Stellung und einer einen Freilauf zwischen An- und Abtrieb ermöglichenden Stellung geschaltet werden können. Dieses Schalten wird mittels der zuvor beschriebenen Kolbenzylindereinheit erreicht.

Figur 1 zeigt die aus der DE 10 2004 025 296 A1 bekannte Bremse 1. Diese weist einen Bremsrotor 2 und einen Bremsstator 3 auf, welche relativ zueinander verdrehbar sind, sofern die Bremse 1 gelüftet ist. Sofern die Bremse 1 geschlossen ist, stehen der Bremsrotor 2 und der Bremsstator 3 reibschlüssig im Eingriff. Zur Ausbildung der Reibkraft kommen ineinandergreifende mit einem Reibbelag versehene Druckscheiben 11 und Innenlamellen 12 zum Einsatz.

Das Paket bestehend aus den mit einem Reibbelag versehenen Druckscheiben 11 und den Innenlamellen 12 wird durch Beaufschlagung mit einer Normalkraft in den reibschlüssigen Eingriff gebracht. Die Normalkraft wird durch ein axiales Verfahren des als Kolben ausgebildeten Bremsstators 3 erzeugt, nämlich dadurch, dass der Kolben in Richtung des Lamellenpakets gedrückt wird. Der Bremsstator 3 ist hydraulisch angetrieben, nämlich durch Ein- und Ausbringen von Hydraulikflüssigkeit durch eine Bohrung 14 in den Arbeitsraum 13.

Bei gattungsgemäßen Bremsen 1 handelt es sich um Sicherheitsbremsen. Im Ruhezustand ist die Bremse 1 immer geschlossen. Hierzu ist ein Kraftspeicher in Form einer Feder 4 vorgesehen, welcher den Bremsstator 3 in Richtung der Lamellen drückt und somit die Bremse schließt. Erst durch ein aktives Betätigen des Kolbens, nämlich eine Beaufschlagung mit Hydraulikflüssigkeit, kann der Kolben entgegen der Kraft der Feder 4 vom Lammellenpaket wegbewegt werden und somit die Bremse gelüftet werden.

Der als Kolben ausgebildete Bremsstator 3 weist zwei Gleitflächen 7, 8 auf, welche durch einen Wellenabsatz radial voneinander beabstandet sind. Der Kolben 3 sitzt in einem Zylinder 6. Der Zylinder 6 weist ebenfalls zwei Gleitflächen 7, 8 auf, welche durch einen Wellenabsatz radial voneinander beabstandet sind. Im Bereich der ersten Gleitflächen und im Bereich der zweiten Gleitflächen ist jeweils ein Dichtsystem bestehend jeweils aus genau einem Dichtelement 9, 10 vorgesehen. Diese beiden Dichtelement 9, 10 dichten den Arbeitsraum 13 zu beiden Seiten hin (in axialer Richtung) ab, so dass keine Hydraulikflüssigkeit austreten kann.

Derartige Bremsen haben sich zwar bewährt. Da es sich bei derartigen Bremsen um sicherheitsrelevante Bauteile handelt, sollte die Betriebssicherheit der Bremse aber weiter erhöht werden. Es muss jederzeit gewährleistet sein, dass sowohl das Schließen als auch das Lüften der Bremse möglich ist.

Es ist daher die **Aufgabe** der vorliegenden Erfindung, ein Sicherheitssystem für eine gattungsgemäße Bremse vorzuschlagen, welches hinsichtlich der Betriebssicherheit verbessert ist und dadurch insbesondere die Fehleranfälligkeit der Bremse verringert und eine Überwachung der ordnungsgemäßen Funktion Bremse erleichtert.
Zur **Lösung** schlägt die Erfindung vor, dass wenigstens eines der Dichtsysteme sowohl ein primäres Dichtelement als auch ein sekundäres Dichtelement aufweist, um den einen Arbeitsraum zu wenigstens einer Seite redundant abzudichten.

Vom Arbeitsraum aus betrachtet, ist das primäre Dichtelement näher am Arbeitsraum angeordnet als das sekundäre. Das primäre Dichtelement dient also im Normalfall der bestimmungsgemäßen Abdichtung des Arbeitsraums. Sofern das primäre Dichtelement versagt und in der Folge Hydraulikflüssigkeit das primäre Dichtelement passiert, bewirkt das sekundäre Dichtelement die Abdichtung des Arbeitsraumes zu dieser Seite hin. Bei einer gegebenenfalls regelmäßig durchzuführenden Wartung der Bremse kann dann detektiert werden, dass Hydraulikflüssigkeit bereits bis zum sekundären Dichtelement gedrungen ist und somit das primäre Dichtelement wohl verschlissen ist. Das primäre Dichtelement kann dann ausgetauscht werden. Die Bremse kann daher bestimmungsgemäß zwischen Wartungsintervallen betrieben werden, ohne dass bei einem verschlissenen primären Dichtelement Hydraulikflüssigkeit austreten würde. Die Betriebssicherheit der Bremse wird dadurch erhöht.

Das primäre Dichtelement kann vom sekundären Dichtelement beabstandet sein. Dadurch ist ein Zwischenbereich zwischen dem primären und dem sekundären Dichtelement geschaffen. Dies bedeutet beispielsweise, dass entsprechende Nuten zur Aufnahme der Dichtelemente voneinander getrennt ausgebildet sind. Ein solcher Abstand hat unter anderem den Vorteil, dass bei einer Wartung der Bremse besser ersichtlich ist, ob Hydraulikflüssigkeit bereits das primäre Dichtelement passiert hat und in den Zwischenbereich zwischen dem primären Dichtelement und dem sekundären Dichtelement gelangt ist.

Es kann vorgesehen sein, dass beide Dichtsysteme im Kolben oder im Zylinder angeordnet sind. Es kann aber auch vorgesehen sein, dass ein erstes Dichtsystem im Kolben und ein zweites Dichtsystem im Zylinder angeordnet ist. Dies erhöht die Flexibilität bei der Konstruktion eines mit dem erfindungsgemäßen Sicherheitssystem ausgestatteten antriebstechnischen Konstruktionseiements.

Sowohl das primäre Dichtelement als auch das sekundäre Dichtelement eines Dichtsystems können entweder im Kolben oder im Zylinder angeordnet sein. Es kann aber auch vorgesehen sein, dass entweder das primäre oder das sekundäre Dichtelement eines Dichtsystems im Kolben und das jeweils andere Dichtelement im Zylinder angeordnet ist. Hierdurch wird weitere Flexibilität bei der Konstruktion geschaffen.

Gemäß einer vorteilhaften Weiterbildung der Erfindung weisen beide Dichtsysteme sowohl ein primäres Dichtelement als auch ein sekundäres Dichtelement auf. Der Arbeitsraum wird somit zu beiden Seiten hin redundant abgedichtet. Dies erhöht die Betriebssicherheit der Bremse zusätzlich.

Gemäß einer vorteilhaften Weiterbildung der Erfindung ist zwischen dem primären Dichtelement und dem sekundären Dichtelement eine Leckagebohrung ausgebildet. Die Leckagebohrung kann sich radial zur Kolbenachse erstrecken. Es sind jedoch auch andere Verläufe und Ausrichtungen der Leckagebohrung denkbar. Entscheidend ist, dass die Leckagebohrung gut zugänglich ist. Die Leckagebohrung kann im Zylinder oder im Kolben ausgebildet sein. Die Leckagebohrung stellt eine Art definierte Leckstelle bereit, durch weiche das bestimmungsgemäß in den Arbeitsraum geförderte Kühlmittel wieder austreten kann. Die Leckagebohrung ist mit Bezug auf die axiale Richtung des Kolbens zwischen dem primären und dem sekundären Dichtelement ausgebildet. Sofern das primäre Dichtelement verschlissen ist und Hydraulikflüssigkeit zwischen das primäre Dichtelement und das sekundäre Dichtelement gelangt, wird diese bei entsprechendem Druck der Hydraulikflüssigkeit durch die Leckagebohrung austreten. Die aus der Leckagebohrung austretende Hydraulikflüssigkeit ist folglich ein Indikator dafür, dass das primäre Dichtelement verschlissen ist. Die Bremse kann dann entsprechend in Stand gesetzt werden. Gleichwohl ist eine sofortige Instandsetzung nicht erforderlich, da immer noch das sekundäre Dichtelement für eine Abdichtung sorgt. Die Betriebssicherheit einer Bremse wird somit erhöht und die Handhabung wird somit vereinfacht.

Die Leckagebohrung muss nicht im gleichen Bauteil wie das zugeordnete Dichtsystem ausgebildet sein. Das primäre und das sekundäre Dichtelement können beispielsweise im Kolben und die Leckagebohrung im Zylinder ausgebildet sein. Für die ordnungsgemäße Funktion des Sicherheitssystems muss die Anordnung der Leckagebohrung somit ausschließlich in axialer Richtung des Kolbens zwischen den beiden Dichtelementen erfolgen. In anderen Richtungen kann die Anordnung der Leckagebohrung entsprechend der konstruktiven Vorgaben flexibel gewählt werden. Die Anordnungen der Leckagebohrung einerseits und des Dichtsystems andererseits sind bis auf die axiale Richtung unabhängig voneinander wählbar ausgebildet.

Die Dichtelemente sind bevorzugt in umlaufende Nuten im Zylinder oder im Kolben angeordnet. Die Dichtelemente können als Radialwellendichtringe ausgebildet sein. Sämtliche Dichtelemente eines Dichtsystems können identisch ausgebildet sein. Die primären Dichtelemente können sich hinsichtlich ihrer Eigenschaften aber auch von den sekundären Dichtelementen unterscheiden. Es kann vorgesehen sein, dass die primären Dichtelemente hochwertiger als die sekundären Dichtelemente ausgebildet sind. Dies deswegen, da das primäre Dichtelement die maßgebliche Dichtfunktion erfüllt und das sekundäre Dichtelement lediglich eine Art Rückfalloption darstellt, wobei eine Abdichtung lediglich durch das sekundäre Dichtelement nicht länger als nötig erfolgen sollte.

Die Erfindung betrifft insbesondere die Verwendung eines zuvor beschriebenen Sicherheitssystems bei einem antriebstechnischen Konstruktionselement wie einer Bremse oder einer lösbaren Kupplung. Die Erfindung betrifft darüber hinaus ein antriebstechnisches Konstruktionselement, insbesondere Bremse oder lösbare Kupplung, mit einer Kupplungsanordnung. Dieses antriebstechnische Konstruktionselement weist ein zuvor beschriebenes Sicherheitssystem auf, wobei der Kolben des Sicherheitssystems derart mit der Kupplungsanordnung zusammenrückt, dass eine Bestätigung des Kolbens eine in der Kupplungsanordnung ein Reibmoment erzeugende Normalkraft verursacht. Die Kupplungsanordnung kann beispielsweise als ineinandergreifendes Lamellenpaket des An- und Abtriebs ausgebildet sein.

Weitere Vorteile und Merkmale der Erfindung ergeben sich aus der nachfolgenden Figurenbeschreibung. Es zeigen:

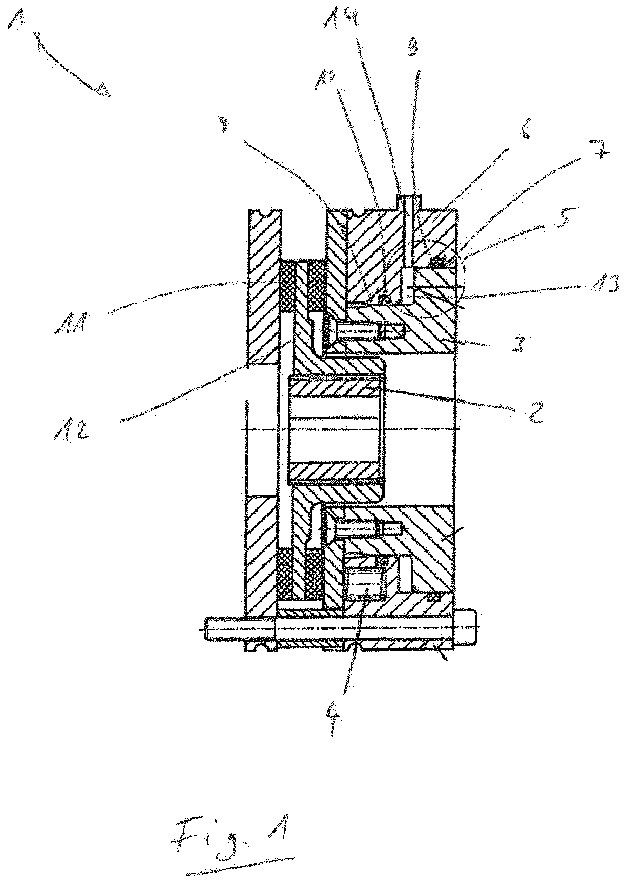

- Fig. 1: die eingangs bereits beschriebene aus dem Stand der Technik bekannte Bremse mit herkömmlichen Dichtsystemen;
- Fig. 2: einen Teilschnitt durch ein Ausführungsbeispiel einer erfindungsgemäßen Bremse, die mit einem erfindungsgemäßen Sicherheitssystem ausgestattet ist; und
- Fig. 3: eine Ausführungsform eines erfindungsgemäßen Sicherheitssystems mit Leckagebohrungen.

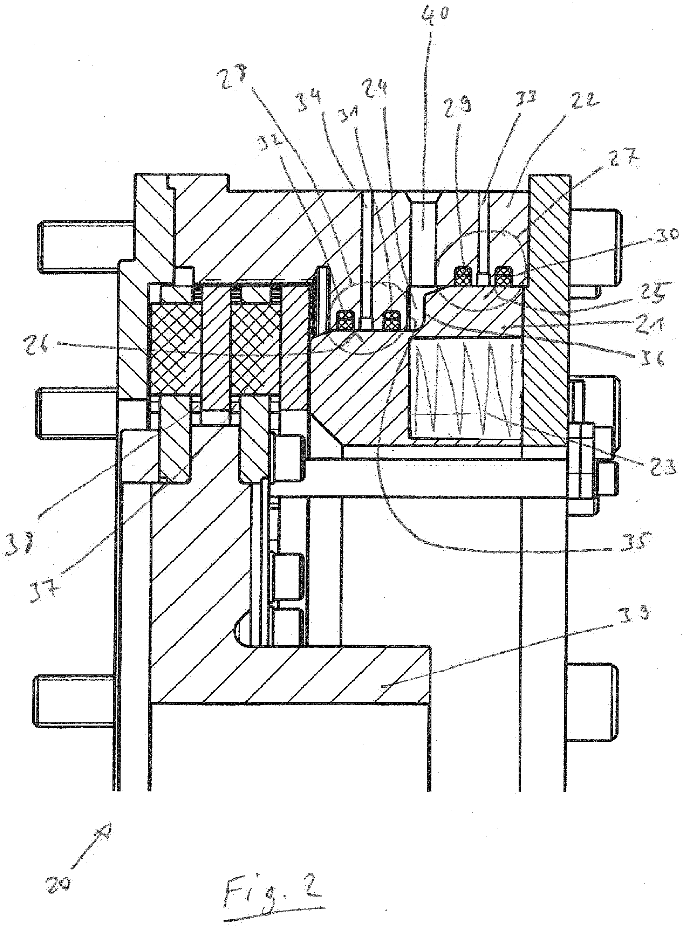

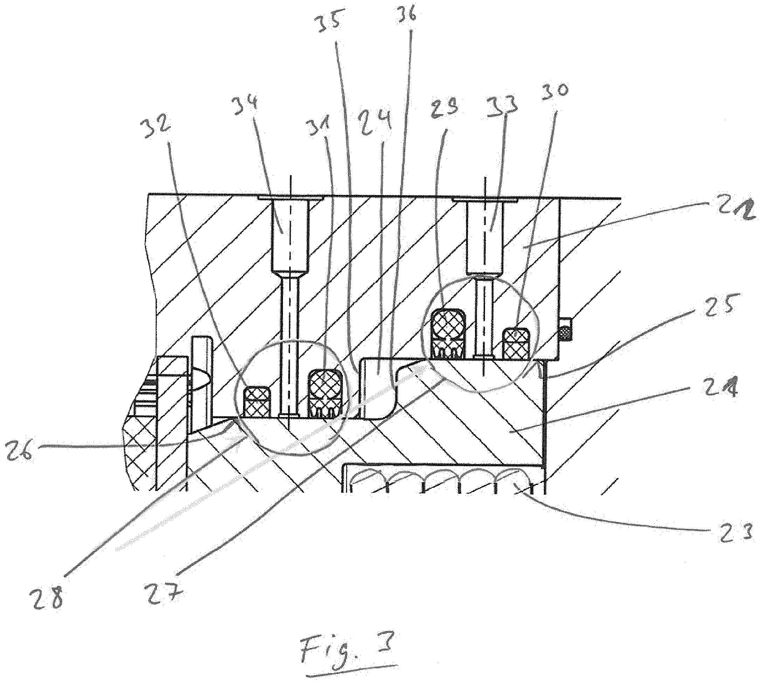

Fig. 2 zeigt eine Ausführungsform einer erfindungsgemäßen Bremse 20. Diese verfügt über eine Ausführungsform eines im Folgenden beschriebenen erfindungsgemäßen Sicherheitssystems, welches im Detail in Fig. 3 dargestellt ist.

Die Bremse weist einen Rotor 39 auf, welcher drehfest mit einer Lamelle 38 verbunden ist. Die Lamelle 38 steht im Eingriff mit einer weiteren Lamelle 37, welche einem nicht weiter bezeichneten Stator zugeordnet ist. Die beiden Lamellen 37, 38 können durch eine axiale Bewegung in einen reibschlüssigen Eingriff miteinander gebracht werden.

Zur Durchführung dieser axialen Bewegung und zur Beaufschlagung der Lamellen 37, 38 mit einer Normalkraft dient ein Kolben 21. Der Kolben 21 drückt mit einer ersten Stirnfläche gegen die Lamelle 37. In der gegenüberliegenden Stirnfläche (Figurenebene rechts) ist eine Ausnehmung ausgebildet. In dieser ist ein Kraftgeber 23, vorliegend als Schraubenfeder ausgebildet, angeordnet. Dieser Kraftgeber 23 drückt den Kolben 21 in Richtung der Lamelle 37, das heißt die Bremse 20 in eine Bremsstellung. Zum Lüften der Bremse 20 muss der Kolben 21 in der Figurenebene nach rechts bewegt werden, so dass die beiden Lamellen 37, 38 ihren reibschlüssigen Eingriff lösen.

Der Kolben 21 ist in einem Zylinder 22 gleitend gelagert. Der Kolben 21 weist eine erste Gleitfläche 25 und eine zweite Gleitfläche 26 auf. Diese sind auf der radialen Außenoberfläche des Kolbens 21 ausgebildet. Die Außenoberfläche des Kolbens 21 ist zylindrisch ausgebildet. Die beiden Gleitflächen 25, 26 sind durch einen Wellenabsatz im Kolben 21 in radialer Richtung voneinander beabstandet. Der Zylinder 22 weist entsprechende, mit dem Kolben 21 gemeinsame Gleitflächen 25, 26 auf. Auch der Zylinder 22 weist einen Wellenabsatz auf, welcher die beiden Gleitflächen 25, 26 in radialer Richtung voneinander beabstandet. Die Höhe der Wellenabsätze vom Kolben 21 und vom Zylinder 22 ist korrespondierend gewählt. Zwischen dem Wellenabsatz des Zylinders 22 und dem Wellenabsatz des Kolbens 21 bildet sich in axialer Richtung ein Arbeitsraum 24 aus. Der Arbeitsraum 24 kann mit einer Hydraulikflüssigkeit beaufschlagt werden. Diese wird durch einen Ein-/Austass 40 in den Arbeitsraum 24 eingebracht. Das Beaufschlagen mit Hydraulikflüssigkeit führt dazu, dass der Kolben 21 in der Figurenebene nach rechts vom Zylinder 22 weggedrückt wird. Diese Bewegung erfolgt entgegen der Federkraft des Kraftgebers 23. Sofern die Hydraulikflüssigkeit wieder aus dem Arbeitsraum 24 ausgebracht wird, wird der Kolben 21 aufgrund der Federkraft des Kraftgebers 23 wieder zurück in Richtung der Lamelle 37 gedrückt, wodurch die Bremse 20 wieder geschlossen wird. Es handelt sich somit um eine sogenannte Sicherheitsbremse, welche in einem Ruhezustand geschlossen ist.

Im Bereich beider Gleitflächen 25, 26 ist jeweils ein Dichtsystem 27, 28 vorgesehen. Das eine Dichtsystem 27 dichtet den Arbeitsraum 24 in der Figurenebene zur rechten Seite ab. Das andere Dichtsystem 28 dichtet den Arbeitsraum 24 in der Figurenebene zur linken Seite ab.

Beide Dichtsysteme 27, 28 weisen die Besonderheit auf, dass sie jeweils über zwei unterschiedliche Dichtelemente 29, 30, 31, 32 verfügen. Hierbei handelt es sich um ein primäres Dichtelement 29, 31 und ein sekundäres Dichtelement 30, 32. Das primäre Dichtelement 29, 31 ist jeweils näher am Arbeitsraum 24 angeordnet als das sekundäre Dichtelement 30, 32.

Die primären Dichtelemente 29, 31 sind von den sekundären Dichtelementen 30, 32 beabstandet. Alle Dichtelemente 29 bis 32 sind in Nuten im Zylinder eingesetzt. Bei den Dichtelementen handelt es sich vorzugsweise um Radialwelfendichtringe.

Das primäre Dichtelement 29, 31 erfüllt bei einem bestimmungsgemäßen Betrieb der Bremse 20 alleine die Funktion des Abdichtens des Arbeitsraums 24. Sofern jedoch eines der primären Dichtelemente 29, 31 verschleißt, dient das jeweilige sekundäre Dichtelement 30, 32 als Sicherheitsdichtelement. Auf diese Weise wird sichergestellt, dass beim Versagen eines primären Dichtelements 29, 31 dennoch keine Hydraulikflüssigkeit unerwünscht austritt, das heißt die Abdichtung des Arbeitsraums 24 immer noch gewährleistet ist.

Zwischen den primären Dichtelementen 29, 31 und den sekundären Dichtelementen 30, 32 ist jeweils eine Leckagebohrung 33, 34 vorgesehen. Durch diese Leckagebohrung 33, 34 kann bestimmungsgemäß Hydraulikflüssigkeit austreten, sofern das jeweilige primäre Dichtelement 29, 31 versagt. Das den Gleitflächen 25, 26 abgewandte Ende der Leckagebohrungen 33, 34 kann beispielsweise vom Verwender der Bremse 20 eingesehen werden oder es sind entsprechende Detektiermittel vorhanden. In jedem Fall kann bei einer Detektion durch die Leckagebohrung 33, 34 austretende Hydraulikflüssigkeit auf ein defektes primäres Dichtelement 29, 31 rückgeschlossen werden. Dies bedeutet jedoch aufgrund des Vorhandenseins der sekundären Dichtelemente 30, 32 nicht, dass die Funktion der Bremse 20 bereits beeinträchtigt wäre. Eine Abdichtung durch diese sekundären Dichtelemente ist vielmehr nach wie vor gewährleistet.

Wenngleich das Ausführungsbeispiel anhand der Figuren 2 und 3 eine Bremse zeigt, ist das beschriebene Prinzip entsprechend auf eine lösbare Kupplung übertragbar.

### Bezugszeichenliste

- 1: Bremse
- 2: Bremsrotor
- 3: Bremsstator
- 4: Kraftgeber
- 5: Kolbenzylindereinheit
- 6: Zylinder
- 7: Gleitfläche
- 8: Gleitfläche
- 9: Dichtelement
- 10: Dichtelement
- 11: Druckscheibe
- 12: Innenlamellen
- 13: Arbeitsraum
- 14: Bohrung
- 20: Bremse
- 21: Kolben
- 22: Zylinder
- 23: Kraftgeber
- 24: Arbeitsraum
- 25: Gleitfläche
- 26: Gleitfläche
- 27: Dichtsystem
- 28: Dichtsystem
- 29: primäres Dichtelement
- 30: sekundäres Dichtelement
- 31: primäres Dichtelement
- 32: sekundäres Dichtelement
- 33: Leckagebohrung
- 34: Leckagebohrung
- 35: Wellenabsatz
- 36: Wellenabsatz
- 37: Lamelle
- 38: Lamelle
- 39: Rotor
- 40: Ein-/Auslass

## Patentansprüche

1. Sicherheitssystem für antriebstechnische Konstruktionselemente, insbesondere Bremsen (20) und lösbare Kupplungen, mit einem hydraulisch angetriebenen Kolben (21) der in einem Zylinder (22) gleitend gelagert ist, wobei der Kolben (21) und der Zylinder (22) jeweils eine erste Gleitfläche (25) und eine zweite, durch einen Wellenabsatz (35, 36) von der ersten Gleitfläche (25) beabstandete Gleitfläche (26) aufweisen, wobei sich ein Arbeitsraum (24) axial zwischen dem Wellenabsatz (35) des Kolbens (21) und dem Wellenabsatz (36) des Zylinders (22) erstreckt, wobei der Arbeitsraum (24) zur einen Seite im Bereich der ersten Gleitflächen (25) mit einem ersten Dichtsystem (27) und zur anderen Seite im Bereich der zweiten Gleitflächen (26) mit einem zweiten Dichtsystem (28) abgedichtet ist,
**dadurch gekennzeichnet,**
**dass** wenigstens eines der Dichtsysteme (27, 28) sowohl ein primäres Dichtelement (29, 31) als auch ein sekundäres Dichtelement (30, 32) aufweist, um den einen Arbeitsraum (24) zu wenigstens einer Seite hin redundant abzudichten..

2. Sicherheitssystem nach Anspruch 1, **dadurch gekennzeichnet, dass** zwischen dem primären Dichtelement (29, 31) und dem sekundären Dichtelement (30, 32) eine Leckagebohrung (33, 34) ausgebildet ist.

3. Sicherheitssystem nach einem der vorangehenden Ansprüche, **dadurch gekennzeichnet, dass** beide Dichtsysteme (27, 28) sowohl ein primäres Dichtelement (29, 31) als auch ein sekundäres Dichtelement (30, 32) aufweisen.

4. Sicherheitssystem nach einem der vorangehenden Ansprüche, **dadurch gekennzeichnet, dass** die Dichtelemente (29, 30, 31, 32) in umlaufenden Nuten im Zylinder (22) oder im Kolben (21) angeordnet sind.

5. Sicherheitssystem nach einem der vorangehenden Ansprüche, **dadurch gekennzeichnet, dass** die Dichtelemente (29, 30, 31, 32) als Radialwellendichtringe ausgebildet sind.

6. Sicherheitssystem nach einem der vorangehenden Ansprüche, **dadurch gekennzeichnet, dass** die Leckagebohrung (33, 34) im Zylinder (22) oder im Kolben (21) ausgebildet ist.

7. Sicherheitssystem nach einem der vorangehenden Ansprüche, **dadurch gekennzeichnet, dass** sich die Leckagebohrung (33, 34) radial zur Kolbenachse erstreckt.

8. Antriebstechnisches Konstruktionselement, insbesondere lösbare Kupplung oder Bremse (20), mit einer zwischen einer ein Drehmoment zwischen An- und Abtrieb übertragenden Stellung und einer einen Freilauf zwischen An- und Abtrieb ermöglichenden Stellung schaltbaren Kupplungsanordnung,
**gekennzeichnet durch**
ein Sicherheitssystem nach einem der vorhergehenden Ansprüche, wobei der Kolben (21) des Sicherheitssystems derart mit der Kupplungsanordnung zusammenwirkt, dass eine Betätigung des Kolbens (21) eine in der Kupplungsanordnung ein Reibmoment erzeugende Normalkraft verursacht.

## Claims

1. A security system for drive engineering construction elements, in particular brakes (20) and releasable clutches, comprising a hydraulically driven piston (21) which is accommodated in a sliding manner in a cylinder (22), wherein the piston (21) and the cylinder (22) respectively comprise a first sliding surface (25) and a second sliding surface (26) which is spaced from the first sliding surface by means of a shaft shoulder (35, 36), wherein a working space (24) extends axially between the shaft shoulder (35) of the piston (21) and the shaft shoulder (36) of the cylinder (22), wherein the working space (24) is sealed on one side in the area of the first sliding surfaces (25) by means of a first sealing system (27) and on the other side in the area of the second sliding surfaces (26) by means of a second sealing system (28),
**characterized in**
**that** at least one of the sealing systems (27, 28) comprises both a primary sealing element (29, 31) and a secondary sealing element (30, 32), in order to seal the first working space (24) at least on one side in a redundant manner.

2. A security system according to claim 1, **characterized in that** a leakage bore (33, 34) is formed between the primary sealing element (29, 31) and the secondary sealing element (30, 32).

3. A security system according to one of the preceding claims, **characterized in that** both sealing systems (27, 28) comprise both a primary sealing element (29, 31) and a secondary sealing element (30, 32).

4. A security system according to one of the preceding claims, **characterized in that** the sealing elements (29, 30, 31, 32) are placed in circumferential grooves in the cylinder (22) or in the piston (21).

5. A security system according to one of the preceding claims, **characterized in that** the sealing elements (29, 30, 31, 32) are designed as radial shaft seal rings.

6. A security system according to one of the preceding claims, **characterized in that** the leakage bore (33, 34) is formed in the cylinder (22) or in the piston (21).

7. A security system according to one of the preceding claims, **characterized in that** the leakage bore (33, 34) extends radially with respect to the piston axis.

8. A drive engineering construction element, in particular a releasable clutch or brake (20) comprising a clutch arrangement that can be switched between a position, in which a torque is transmitted between input and output, and a position which enables a freewheel between input and output,
**characterized by**
a security system according to one of the preceding claims, wherein the piston (21) of the security system cooperates with the clutch arrangement such that the actuation of the piston (21) provokes a normal force which generates a frictional torque in the clutch arrangement.

## Revendications

1. Système de sécurité pour des éléments de construction à entraînement, notamment des freins (20) et des accouplements débrayables, comprenant un piston (21) entraîné hydrauliquement, qui est logé dans un cylindre (22) de manière glissante, le piston (21) et le cylindre (22) comprenant chacun une première surface de glissement (25) et une deuxième surface de glissement (26) espacée de la première surface de glissement (25) par moyen d'un épaulement d'arbre (35, 36), un espace de travail (24) s'étendant axialement entre l'épaulement d'arbre (35) du piston (21) et l'épaulement d'arbre (36) du cylindre (22), l'espace de travail étant rendu étanche sur un côté dans la zone des premières surfaces de glissement (25) par moyen d'un premier système d'étanchéité (27) et sur l'autre côté dans la zone des deuxièmes surfaces de glissement (26) par moyen d'un deuxième système d'étanchéité (28),
**caractérisé en ce**
**qu'**au moins l'un des systèmes d'étanchéité (27, 28) comprend un élément d'étanchéité primaire (29, 31) et un élément d'étanchéité secondaire (30, 32) pour rendre l'espace de travail étanche sur au moins un côté de manière redondante.

2. Système de sécurité selon la revendication 1, **caractérisé en ce qu'**un trou de coulage (33, 34) est formé entre l'élément d'étanchéité primaire (29, 31) et l'élément d'étanchéité secondaire (30, 32).

3. Système de sécurité selon l'une des revendications précédentes, **caractérisé en ce que** les deux systèmes d'étanchéité (27, 28) comprennent un élément d'étanchéité primaire (29, 31) et un élément d'étanchéité secondaire (30, 32).

4. Système de sécurité selon l'une des revendications précédentes, **caractérisé en ce que** les éléments d'étanchéité (29, 30, 31, 32) sont disposés dans des rainures circonférentielles dans le cylindre (22) ou dans le piston (21).

5. Système de sécurité selon l'une des revendications précédentes, **caractérisé en ce que** les éléments d'étanchéité (29, 30, 31, 32) sont conçus comme des joints d'arbre radiaux.

6. Système de sécurité selon l'une des revendications précédentes, **caractérisé en ce que** le trou de coulage (33, 34) est formé dans le cylindre (22) ou dans le piston (21).

7. Système de sécurité selon l'une des revendications précédentes, **caractérisé en ce que** le trou de coulage (33, 34) s'étend radialement à l'axe de piston.

8. Elément de construction à entraînement, notamment un accouplement débrayable ou un frein (20), comprenant un ensemble d'accouplement, qui peut être commuté entre une position, dans laquelle un moment de rotation est transmis entre l'entrée et la sortie, et une position qui permet une course libre entre l'entrée et la sortie,
**caractérisé par**
un système de sécurité selon l'une des revendications précédentes, dans lequel le piston (21) du système de sécurité coopère avec l'ensemble d'accouplement, de sorte que l'actionnement du piston (21) provoque une force normale, qui génère un couple de frottement dans l'ensemble d'accouplement.
